# EUROPÄISCHE PATENTSCHRIFT

(11) **EP 2 206 616 B1**
(45) Veröffentlichungstag und Bekanntmachung des Hinweises auf die Patenterteilung: **19.10.2011**
(21) Anmeldenummer: 09014930.3
(22) Anmeldetag: 02.12.2009
(51) Int. Cl.: B60C 27/16

(54) **Gleitschutzelementträger**
Anti-skid element holder
Support d'élément antidérapant

(30) Priorität: 13.01.2009 DE 102009004804
(43) Veröffentlichungstag der Anmeldung: 14.07.2010
(73) Patentinhaber: RUD Ketten Rieger & Dietz GmbH u. Co. KG, 73432 Aalen (DE)
(72) Erfinder: Winkler, Martin, 73457 Essingen (DE)
(74) Vertreter: Grünecker, Kinkeldey, Stockmair & Schwanhäusser

(56) Entgegenhaltungen:
- EP-A1- 0 523 824
- WO-A1-2006/106442
- DE-A1- 3 823 661

## Beschreibung

Die vorliegende Erfindung betrifft einen Gleitschutzelementträger für das Laufnetz einer Gleitschutzvorrichtung für einen Fahrzeugreifen, umfassend eine Trägerplatte, die an sich gegenüberliegenden axialen Randbereichen jeweils wenigstens eine Aufnahme für das Laufnetz, und einen Haltebügel, der einen Steg und zwei im Wesentlichen parallel zueinander verlaufende in eine Einstecköffnung der Trägerplatte eingesetzte Halteschenkel aufweist, wobei wenigstens einer der Halteschenkel die wenigstens eine Aufnahme an zumindest einem der axialen Randbereiche durchquert.

Die DE 90 14 636 betrifft eine Anfahrhilfe für Kraftfahrzeuge im Schnee oder auf Eis mit zumindest einem auf die Oberfläche eines Reifens aufsetzbaren Elementes, das mit Vorsprüngen bestückt und zur Festlegung an dem Reifen mit zumindest einem durch ein Felgenloch führbaren Halteelement, das zumindest teilweise aus Ketten bzw. Kettengliedern besteht, verbunden ist.

Gleitschutzvorrichtungen für einen Fahrzeugreifen mit einem Laufnetz bestehend aus zwischen Gleitschutzelementträgern verlaufenden Kettenstrangabschnitten sind beispielsweise aus der DE 382 36 61 A1 bekannt. Diese Gleitschutzvorrichtung umfasst eine am Rad befestigbare, gegenüber diesem drehbare Halterung für die im montierten Zustand an der Lauffläche des Fahrzeugrades angeordneten Gleitschutzelementträger. Der bekannte Gleitschutzelementträger besteht aus einem biegsamen Material, insbesondere Gummi oder Kunststoff, was einer Geräuschentwicklung auf trockenen Fahrbahnen entgegenwirkt und zudem die Haftreibungsbedingungen zwischen Fahrzeugrad und Fahrzeugbahn verbessert.

Problematisch bei Gleitschutzelementträgern mit einer biegsamen Trägerplatte ist jedoch deren Verschleißanfälligkeit und eine verringerte Festigkeit des Laufnetzes im Bereich der Gleitschutzelementträgerplatte aufgrund der Unterbrechung des Kettenstranges.

Ein weiterer gattungsbildender Gleitschutzelementträger ist aus der WO 2006/106442 A1 bekannt, bei dem die Schenkel eines Haltebügels als Haltebolzen zur Befestigung des Laufnetzes am Gleitschutzelementträger bzw. als Lager für Befestigungselemente dienen. Der Haltebügel erhöht die Festigkeit des Gleitschutzelementträgers und stellt insbesondere eine kraftübertragende Verbindung zwischen den Abschnitten des Laufnetzes dar.

Die Schenkel des Haltebügels der WO 2006/106442 A1 durchqueren den Gleitschutzelementträger vollständig von einer axialen Seite bis zur gegenüberliegenden Seite, was sich zwar positiv auf die Festigkeit auswirkt, jedoch den Gleitschutzelementträger versteift. Die Versteifung aber führt zu einer erhöhten Geräuschentwicklung auf trockener Fahrbahn und senkt die Haftreibung zwischen Fahrzeugrad und Fahrbahn.

Die Aufgabe der vorliegenden Erfindung ist es daher, einen Gleitschutzelementträger bereit zu stellen, der bei unverändert guten Traktionseigenschaften geräuschärmer ist und weniger verschleißt.

Diese Aufgabe wird für den eingangs genannten Gleitschutzelementträger dadurch gelöst, dass ein weiterer Haltebügel vorgesehen ist, der mit wenigstens einem seiner Halteschenkel die wenigstens eine Aufnahme an dem anderen axialen Randbereich durchquert, und dass die Trägerplatte zwischen den sich gegenüberliegenden Enden der Haltebügel einen biegsamen Bereich mit gegenüber den von den Halteschenkeln eingenommenen Bereichen erhöhter Verformbarkeit aufweist.

Die Halteschenkel des erfindungsgemäßen Gleitschutzelementträgers durchdringen, im Unterschied zu Träger der WO 2006/106442 A1, die Trägerplatte nicht komplett, so dass die Mitte der Trägerplatte biegsamer und torsionsfähiger als der Bereich mit den versteifenden Halteschenkel bleibt. Dies wirkt sich vorteilhaft auf die Haftreibungsbedingungen zwischen Fahrzeugreifen und Fahrbahn sowie die Geräuschentwicklung bei trockener Fahrbahn aus, da eine biegsamere Trägerplatte sich besser an Fahrbahnunebenheiten oder Verformungen der Fahrzeugreifens bei Kurvenfahrt anpassen kann. Gleichzeitig bleiben bei dem erfindungsgemäßen Gleitschutzelementträger jedoch die Vorteile einer durch die Haltebügel bedingten mechanischem Verstärkung der Trägerplatte, welche die Verschleißerscheinungen der Trägerplatte reduziert, erhalten.

Die erfindungsgemäße Lösung kann durch eine Reihe von voneinander jeweils unabhängigen Ausgestaltungen weiter verbessert werden. Diese Ausgestaltungen und die damit verbundenen Vorteile sind im Folgenden kurz beschrieben.

Bei Gleitschutzelementträgern ist problematisch, dass für jede Gleitschutzvorrichtung, je nach deren Befestigungsmechanismus, sei es durch Gurte, Spannketten oder speichenartig ausgebildete Haltearme von selbstaufziehenden Gleitschutzvorrichtungen, beispielsweise bekannt aus der EP 0 376 428 A1, individuell an die unterschiedlichen Gleitschutzvorrichtungen angepasste Gleitschutzelementträger für das Laufnetz benötigt werden. Gemäß einer besonders vorteilhaften Ausführungsform kann ein Gleitschutzelementträger als Baukastensystem bereitgestellt werden, der für praktisch jede beliebige Art von Gleitschutzvorrichtung verwendet werden kann, indem wenigstens einer der Haltebügel ein Anschlusselement für ein die Trägerplatte auf dem Fahrzeugreifen fixierendes Halteorgan mit der Trägerplatte wiederholt lösbar verbindet. Bei dieser Ausführungsform stellt der Haltebügel das Verbindungsorgan dar, mit welchem das Anschlusselement, beispielsweise die Ausleger von selbstaufziehenden Gleitschutzvorrichtungen, an denen die in Richtung der Lauffläche des Fahrzeugreifens weisenden Enden der Haltearme mit dem Gleitschutzelementträger verbunden sind, wiederholt lösbar mit der Trägerplatte verbindet. Nach Abnehmen des Haltebügels kann das Anschlusselement auf einfache Weise von der Trägerplatte getrennt und gegen ein beliebiges Anschlusselement gleicher oder einer anderen Art ersetzt werden.

In einer konstruktiv besonders einfachen Ausführungsform mit wenigen Bauteilen kann der außerhalb der Trägerplatte angeordnete, den Steg aufweisenden Abschnitt wenigstens eines Haltebügels das Anschlusselement ausbilden. Sofern beispielsweise der Steg des Haltebügels nicht unmittelbar an der Trägerplatte zum Liegen kommt, bildet der stegseitige Bereich des Haltebügels zusammen mit der Trägerplatte ein Auge bzw. eine Befestigungsöse aus, in welche beliebige Halteorgane eingehängt werden können.

Ferner können gemäß einer weiteren vorteilhaften Ausführungsform zwei Haltebügel von sich gegenüberliegenden Axialseiten in die Trägerplatte eingesetzt sein, die jeweils ein Anschlusselement mit der Trägerplatte verbinden und/oder ein Anschlusselement für ein Halteorgan ausbilden. Diese Ausführungsform ist insbesondere für Gleitschutzvorrichtungen geeignet, bei denen die von der Spannvorrichtung an der einen Seite des Fahrzeugreifens aufgebrachte Kraft auf die gegenüberliegende Fahrzeugreifenseite übertragen werden muss, um ein Verrutschen des Gleitschutzelementträgers bzw. des Laufnetzes in axialer Richtung zu vermeiden.

Wird der Haltebügel als Verbindungsorgan zum Befestigen eines separaten Anschlusselementes an der Trägerplatte eingesetzt, bietet es sich an, einen Haltebügel zu verwenden, dessen Steg im Wesentlichen gerade und senkrecht zu den beiden Halteschenkeln verläuft. Der Steg eines derartige Haltebügels bewirkt eine gleichmäßige Kraftübertragung und einen guten Formschluss.

Eine Ausführungsform, die insbesondere für biegeschlaffe Haltelemente, beispielsweise Haltegurte, als Halteorgane des Gleitschutzelementträgers geeignet ist, kann einen Haltebügel mit einem Steg aufweisen, der im wesentlichen gerade und schräg zu den beiden Halteschenkeln verläuft, um eine Überwanderung des Laufnetzes besser auffangen zu können. Überwanderung bedeutet hier, dass das dem Gleitschutzelementträger zugeordnete laufnetzseitige Ende des biegeschlaffen Halteelements, insbesondere beim Anfahren, eine größere Umlaufgeschwindigkeit in Rollrichtung aufweist als das der Befestigungs- bzw. Spannvorrichtung zugeordnete Ende des Halteelements. Dadurch wird das biegeschlaffe Halteelement nicht nur in radialer Richtung entlang seiner Längsachse beansprucht, sondern durch die aufgrund der Überwanderung auftretende entgegen der Rollrichtung gerichtete Kraft auch quer dazu. Dies bringt die Gefahr eines Verrutschens des Halteelements und Festsetzen dieses in einer Ecke der Anschlussöse mit sich. Durch den schrägen Verlauf des Steges zu den beiden Halteschenkeln, die sich vorteilhafter Weise in axialer Richtung des montierten Gleitschutzelementträgers erstrecken, verläuft der Steg im montierten Zustand schräg zur Rollrichtung, wobei das in Rollrichtung vordere Ende des Steges weiter von der Mittellängsachse des Reifenmantels entfernt ist als das hintere Ende des Steges. Auf diese Weise realisiert diese Ausführungsform eine Vororientierung des um den Steg des Haltebügels geschlungenen biegeschlaffen Halteelements im Wesentlichen in die Richtung, in welche die aus in radialer Richtung wirkende Spannkraft und entgegen der Rollrichtung wirkende Überwanderungskraft resultierende Kraft zeigt.

Eine Ausführungsform, die insbesondere für Gleitschutzvorrichtungen mit Ketten oder Seilen als fixierenden Halteorganen geeignet ist, kann einen Haltebügel vorsehen, bei dem der Steg im Wesentlichen winkelförmig und/oder halbkreisförmig ausgestaltet ist. Bei dieser Form des Steges erhält die dadurch gebildete Öse im von der Trägerplatte abgewandten Bereich eine Rundung bzw. Spitze, an welcher die auf einen kleinen Anschlagpunkt konzentriert mittels des Halteseils bzw. der Haltekette eingeleiteten Spannkräfte gleichmäßig auf die beiden Halteschenkel verteilt werden.

Auch ein im Wesentlichen winkelförmig ausgestalteter Steg kann eine Vororientierung des Haltegurtes bewirken, bei welcher das am Gleitschutzelementträger des Laufnetzes befestigte Ende des Gurtes einen der Schenkel des winkelförmigen Steges umschliesst. Vorteilhafter Weise sollte der Steg dabei einen spitzen Winkel aufweisen, damit der Gurt nicht durch die vom Spannorgan der Befestigungsvorrichtung radial auf den Haltegurt wirkende Kraft in die Winkelspitze rutschen kann. Der Vorteil eines solchen, vorzugsweise symmetrisch winkelförmig ausgebildeten Steges ist, dass die Montage derartigen Haltebügels besonders einfach ist, da man nicht auf das richtige Einschieben des Haltebügels zur korrekten Ausrichtung des Steges für die Vororientierung des Gurtes achten muss.

Gemäß einer weiteren vorteilhaften Ausführungsform kann wenigstens ein Befestigungselement den Haltebügel an der Trägerplatte sichern, wodurch ein unbeabsichtigtes Abnehmen des Haltebügels von der Trägerplatte ausgeschlossen wird. Vorzugsweise ist das Befestigungselement mit einem der Haltebügel wiederholt lösbar verbindbar ausgestaltet. Besonders vorzugsweise kann das wenigstens eine Befestigungselement ein Gleitschutzelement ausbilden, wodurch die Traktion des Gleitschutzelementträgers weiter verbessert wird. Insbesondere kann das Befestigungselement aus einem Material bestehen, das eine höhere Abriebfestigkeit als die Trägerplatte aufweist und kann beispielsweise um den Halteschenkel herum angeordnet mit diesem verbunden werden. Somit fungiert das Befestigungselement neben der Sicherung des Haltebügels an der Trägerplatte ferner als ein weiteres den Abrieb der Trägerplatte reduzierendes Verschleiß- und Gleitschutzelement.

Eine weitere Ausführungsform sieht vor, dass sich die Einführöffnung von einer Axialseite der Trägerplatte bis zu einer von außen zugänglichen Ausnehmung der Trägerplatte verläuft. Das Befestigungselementes ist vorzugsweise in der Ausnehmung der Trägerplatte, beispielsweise einer Aushöhlung der Trägerplatte, deren Zugangsbereich vollständig von der Trägerplatte umschlossen ist, angeordnet. Diese Anordnung ermöglicht es, das verschleißreduzierende, abriebfeste Befestigungselement in der Trägerplatte zu platzieren. Auf diese Weise werden durch das Befestigungselement insbesondere die Bereiche um die Ausnehmung der Trägerplatte herum vor Verschleiß geschützt. Außerdem bildet das Befestigungselement in vorteilhafter Weise ferner gleichzeitig ein weiteres Gleitschutzelement aus. Da das eine Ende der Einführöffnung im Rand der Trägerplatte mündet, ist eine besonders einfache Montage des Laufnetzes durch Einschieben der freien Enden der Halteschenkel durch die in der Axialseite befindlichen und somit gut zugänglichen Einführöffnungen möglich.

Vorzugsweise erstreckt sich die Öffnung von der Lauffläche der Trägerplatte aus durch diese hindurch und kann die Kraft von dem Fahrzeugreifen direkt auf die Fahrbahn übertragen, ohne die Trägerplatte zu beanspruchen und zu verschleißen.

Ein besonders kostengünstiges, einfaches und leicht mit dem Haltebügel verbindbares Befestigungsmittel ist eine Befestigungshülse. Insbesondere zylindrische Hülsen sind leicht aus abriebfesten Materialien zu fertigen, können auf einfache Weise über einen Halteschenkel des Haltebügels geschoben und mit diesem durch Pressen kraftschlüssig verbunden werden, und bieten ferner den Vorteil eines leicht austauschbaren Verschleißelementes.

Besonders gut kann eine Befestigungshülse den Verschleiß der Trägerplatte des erfindungsgemäßen Gleitschutzelementträgers reduzieren, sofern, gemäß einer weiteren Ausführungsform, der Außendurchmesser der Befestigungshülse in etwa der Stärke der Trägerplatte im Bereich der Ausnehmung entspricht. Dadurch wird die biegsame und kompressible Trägerplatte insbesondere im Bereich um die Befestigungshülse herum geschont, da die Hülse die Kräfte von der Fahrbahn aufnimmt und direkt auf den Fahrzeugreifen übertragenden überträgt, ohne die Trägerplatte zu belasten.

In einer weiteren vorteilhaften Ausführungsform kann an wenigstens einem der Randbereiche eine durchgehende Aufnahme vorgesehen sein, so dass eine durchgehende Kette als Laufnetz verwendet werden kann, die diese Aufnahme durchläuft. Somit ist es nicht mehr erforderlich, einzelne Kettenstrangsegmente des Laufnetzes in jeder der an sich gegenüberliegenden Seiten angeordneten Aufnahmen zu befestigen.

Im Folgenden ist die Erfindung mit Bezug auf die Zeichnungen anhand mehrerer Ausführungsformen, deren unterschiedliche Merkmale gemäß den obigen Bemerkungen beliebig miteinander kombinierbar sind, näher erläutert.

Es zeigen:
- Fig. 1: eine schematische perspektivische Darstellung einer Gleitschutzvorrichtung mit einem Laufnetz umfassend einen erfindungsgemäßen Gleitschutzelementträger gemäß einer ersten Ausführungsform;
- Fig. 2: eine schematische perspektivische Darstellung einer Trägerplatte für einen erfindungsgemäßen Gleitschutzelementträger;
- Fig. 3: eine Aufsicht auf die Lauffläche der Trägerplatte der Fig. 2;
- Fig. 4: einen Ausschnitt der Unterseite der Trägerplatte gemäß Fig. 2 und 3;
- Fig. 5: eine Vergrößerung des in Fig. 3 mit A bezeichneten Ausschnittes der Trägerplatte;
- Fig. 6: eine Seitenansicht der Trägerplatte der Fig. 2 und 3 betrachtet in Umlaufrichtung der montierten Gleitschutzvorrichtung;
- Fig. 7: eine schematische Seitenansicht der Trägerplatte der Fig. 2 und 3 in axialer Richtung betrachtet;
- Fig. 8: einen Haltebügel für einen erfindungsgemäßen Gleitschutzelementträger in einer ersten Ausführungsform;
- Fig. 9: eine schematische perspektivische Aufsicht auf die Lauffläche des erfindungsgemäßen Gleitschutzelementträgers der in Fig. 1 gezeigten Gleitschutzvorrichtung;
- Fig. 10: eine schematische Seitenansicht des Gleitschutzelementträgers der Fig. 9 in Umlaufrichtung betrachtet;
- Fig. 11: eine Schnittdarstellung entlang I-I der Trägerplatte der Fig. 3;
- Fig. 12: einen Haltebügel für einen Gleitschutzelementträger gemäß einer zweiten Ausführungsform;
- Fig. 13: eine schematische Aufsicht auf die Lauffläche eines Gleitschutzelementträgers umfassend den Haltebügel der Fig. 12 gemäß einer zweiten Ausführungsform;
- Fig. 14: einen Haltebügel für einen Gleitschutzelementträger gemäß einer dritten Ausführungsform;
- Fig. 15: eine schematische Aufsicht auf die Lauffläche eines Gleitschutzelementträgers gemäß einer dritten Ausführungsform umfassend den Haltebügel der Fig. 14;
- Fig. 16: eine vierte Ausführungsform eines erfindungsgemäßen Gleitschutzelementträgers, in Umlaufrichtung betrachtet, umfassend den Haltebügel der Fig. 14;
- Fig. 17: eine schematische Seitenansicht des Gleitschutzelementträgers der Fig. 16 in Umlaufrichtung betrachtet;
- Fig. 18: eine fünfte Ausführungsform eines erfindungsgemäßen Gleitschutzelementträgers, in Umlaufrichtung betrachtet, umfassend den Haltebügel der Fig. 14;
- Fig. 19: eine schematische Seitenansicht des Gleitschutzelementträgers der Fig. 18 in Umlaufrichtung betrachtet.

Zunächst wird der schematische Aufbau einer auf einem Fahrzeugreifen 3 montierten Gleitschutzvorrichtung 1 umfassend einen erfindungsgemäßen Gleitschutzelementträger 2 dargestellt.

Die Gleitschutzvorrichtung 1 weist ein Laufnetz 4 mit Kettensträngen 5, gegebenenfalls Querstegen 6 und/oder Verkürzungselementen 6 und Gleitschutzelementträgern 2 auf.

Im montierten Zustand der Gleitschutzvorrichtung 1 liegt das Laufnetz 4 auf der Reifenlauffläche 7, und somit auch im Bereich der Reifenaufstandsfläche, zwischen Fahrzeugrad und Untergrund, wodurch die Traktion auf rutschigem Untergrund erhöht wird.

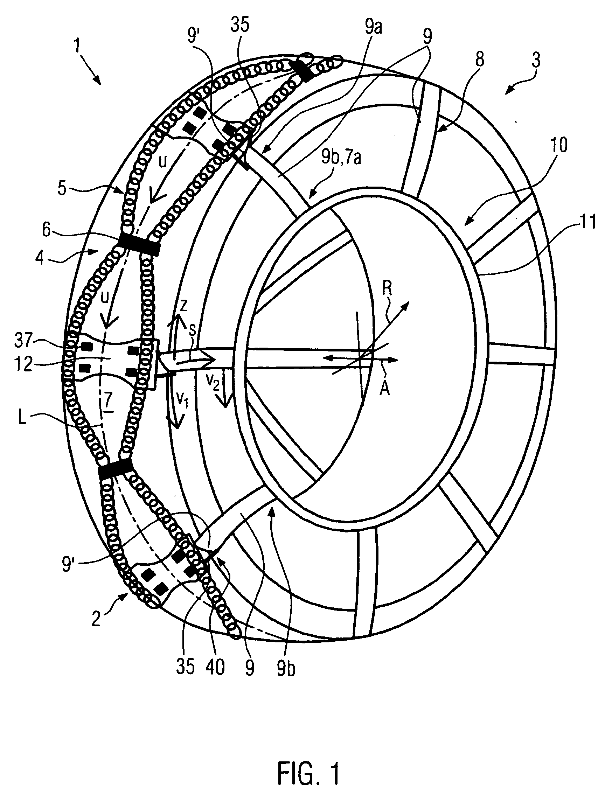

Die Gleitschutzelementträger 2 werden über Halteorgane 8, beispielsweise die in der Fig. 1 dargestellten Haltegurte 9, in Position gehalten. Dazu ist das Laufnetz 4 über die Halteorgane 8 und eine Befestigungseinrichtung 10, in der gezeigten Ausführungsform ein Spannring 11, der die Haltegurte 9 in radialer Richtung R zur Nabe des Fahrzeugrades hinzieht, auf dem Fahrzeugreifen 3 verankert.

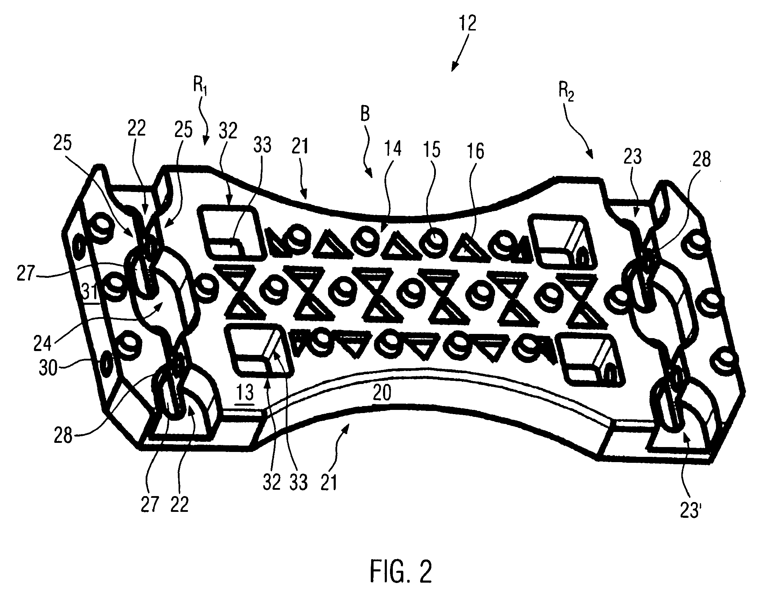

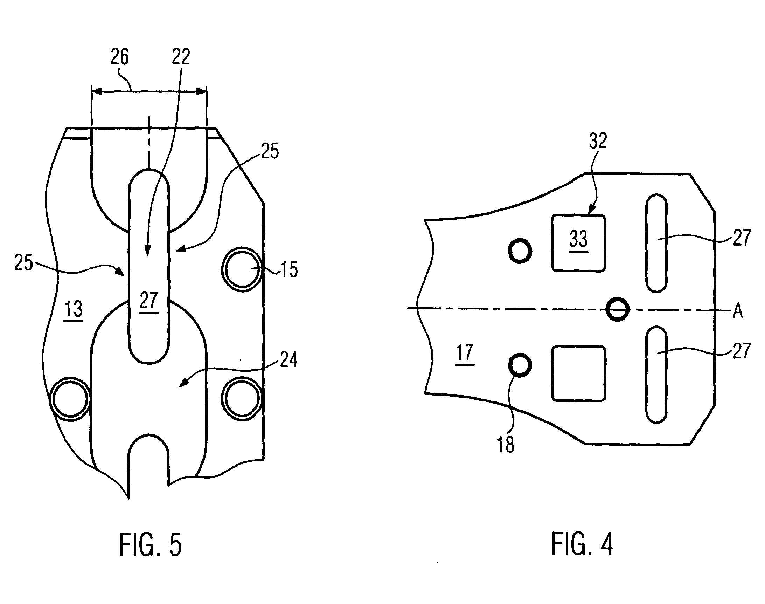

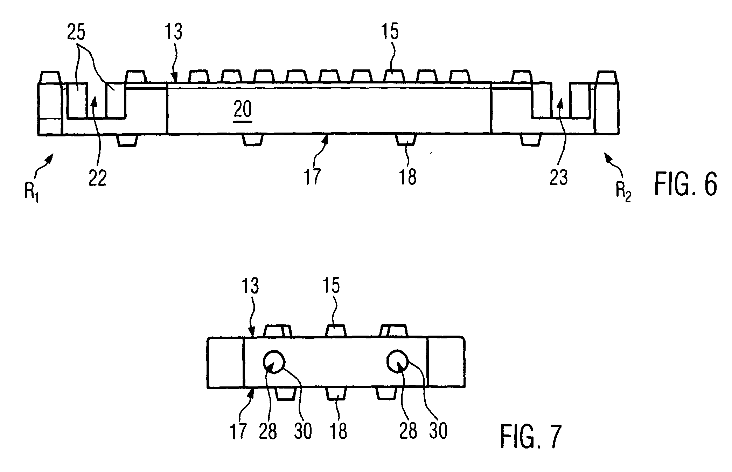

Im Folgenden wird eine Trägerplatte 12 des in Fig. 1 dargestellten Gleitschutzelementträgers 2 unter Bezugnahme auf die Fig. 2 bis 7 näher beschrieben.

Die Trägerplatte 12 besteht aus einem biegsamen Material, beispielsweise Polyurethan und weist eine Lauffläche 13, z.B. mit traktionserhöhenden Gleitschutzelemente 14 in Form von Spikes 15 und Mulden 16 auf.

An der der Lauffläche 13 gegenüberliegenden Unterseite 17 der Trägerplatte 12, die im montierten Zustand mit der Reifenlauffläche 7 in Kontakt kommt, ist die Trägerplatte 12 mit Mitnehmern 18 versehen, welche die Traktionskräfte vom Gleitschutzelementträger 2 auf das Fahrzeugrad 3 übertragen und einem Durchrutschen des Laufnetzes 4 gegenüber der Reifenlauffläche 7 entgegenwirken.

Die Trägerplatte 12 ist an ihrer im montierten Zustand in Roll- bzw. Umlaufsrichtung U weisenden Vorderseite 19 sowie an ihrer entgegen der Umlaufrichtung U weisenden Rückseite 20 jeweils mit einer bogenförmigen Aussparung 21 versehen, so dass die Trägerplatte 12 eine im Wesentlichen bikonkave Form aufweist. Die Aussparungen 21 verbessern die Torsionsfähigkeit der Trägerplatte 12 des Gleitschutzelementträgers 2, insbesondere im Mittelbereich B der Trägerplatte 12 um die im montierten Zustand der Gleitschutzvorrichtung 1 parallel zur Umlaufrichtung U weisenden Mittelachse M der Trägerplatte 12 herum. Diese Mittelachse M ist im montierten Zustand auf dem zentralen Bereich der Reifenlauffläche 7 nahe oder auf der Mittellängsachse L des Reifens 3 angeordnet.

An den lateralen, im montierten Zustand der Gleitschutzvorrichtung 1 in axialer Richtung A weisenden axialen Randbereichen R1, R2, die in der gezeigten Ausführungsform im Wesentlichen nicht durch die Aussparungen 21 eingeschnürt sind, ist die Trägerplatte 12 an ihrer Vorderseite 19 bzw. der der Vorderseite 19 gegenüberliegenden Rückseite 20 jeweils mit einer Aufnahme 22 bzw. 23 für das Laufnetz 4, speziell die Kettenstränge 5 des Laufnetzes 4 versehen. Die Aufnahmen 22, 23 sind in ihrer Form an die Gestalt von Gliedern der Kettenstränge 5 angepasst, die somit formschlüssig in die Aufnahmen 22, 23 eingelegt werden können.

In der gezeigten Ausführungsform ist in beiden axialen Randbereichen R1 und R2 der Trägerplatte 12 eine durchgehende Aufnahme 24 vorgesehen, die einen im Wesentlichen in Umlaufrichtung U verlaufenden Kettenkanal ausbildet, der die Lauffläche 13 der Trägerplatte 12 von deren Vorderseite 19 bis zu deren Rückseite 20 vollständig durchzieht.

Die Aufnahmen 22, 23, 24 weisen Einengungen 25 an den Stellen auf, an denen Kettenglieder aufrecht in der Trägerplatte 12 zum Liegen kommen. Im Übrigen entspricht die Breite 26 der Aufnahmen 22, 23, 24 im Wesentlichen der Außenbreite eines Kettengliedes der Kettenstränge 5, wodurch die Form der Aufnahmen 22, 23, 24 an die Form der Kettenstränge 5 angepasst ist. Zur Verschleißreduzierung der Trägerplatte 12 im Bereich der Aufnahmen 22, 23, 24 weisen die Bereiche der Einengungen 25, in denen die einzelnen Kettenglieder aufrecht in der Trägerplatte 12 angeordnet werden, schlitzförmige Öffnungen 27 auf, an denen die Aufnahmen 22, 23, 24 durch die Unterseite 17 der Trägerplatte 12 hindurchgehen.

Ferner weist die Trägerplatte 12 Einstecköffnungen 28 auf, in die ein Haltebügel 29, 29a eingesetzt werden kann. Die Einstecköffnungen 28 der Trägerplatte 12 erstrecken sich im Wesentlichen quer und senkrecht zur in Umlaufrichtung U weisenden Mittelachse M der Lauffläche 13, d.h. verlaufen in axialer Richtung A des montierten Gleitschutzelementträgers 2. Das eine Ende 30 der Einstecköffnung 28 mündet in einer Axialseite 31, 31' der Trägerplatte 12, die im montierten Zustand in axialer Richtung A weisen, und bildet dort die Einführöffnung 30 für den Haltebügel 29. Von der Einführöffnung 30 aus erstreckt sich die Einstecköffnung 28 im Wesentlichen in axialer Richtung A der im montierten Zustand befindlichen Trägerplatte 12 des Gleitschutzelementträgers 2, durchquert die Aufnahme 22, 23, 24 und mündet schließlich in einer von außen zugänglichen Ausnehmung 32.

Die von außen zugängliche Ausnehmung 32 ist eine durch die Trägerplatte 12 hindurchgehende Öffnung 33, welche die Trägerplatte 12 von der Lauffläche 13 bis zur Unterseite 17 durchdringt, wobei die Ausnehmungsöffnung 33 komplett von der Trägerplatte 12 umschlossen ist.

Die Trägerplatte 12 der gezeigten Ausführungsform ist an jeder Axialseite 31, 31' mit zwei im montierten Zustand in Umlaufrichtung U voneinander beabstandeten parallel verlaufenden Einstecköffnungen 28 versehen, welche die Aufnahme 22, 23, 24 an einer Einengung 25 durchqueren. Dadurch führt ein Einschieben des Haltebügels 29, 29a in die Einstecköffnungen 28 dazu, dass dessen Halteschenkel 34, 34', 34a, 34a' durch die Öffnung eines Kettengliedes geführt werden, dass in aufrechter Position im Bereich einer Einengung 25 eingelegt ist. Somit verankern die in die Einstecköffnung 28 eingesetzten Halteschenkel 34, 34', 34a, 34a' die Kettenstränge 5 des Laufnetzes an dem erfindungsgemäßen Gleitschutzelementträger 2.

Die Ausnehmungsöffnungen 33 sind in dem Bereich an der Trägerplatte 12 angeordnet, an dem die Einschnürung der bogenförmigen Aussparungen 21 an der Vorderseite 19 bzw. Rückseite 20 einsetzt. Die Einstecköffnung 28 erstreckt sich also im Wesentlichen nicht, d.h. endet vor dem tordierbaren, verjüngten biegsamen Bereich B der Trägerplatte 12 zwischen den Ausnehmungsöffnungen 33, in denen die sich gegenüberliegenden Enden 36, 36a der Halteschenkel 29, 29a zum Liegen kommen, der somit gegenüber den von den Halteschenkeln 34, 34', 34a, 34a' eingenommenen axialen Randbereichen R1, R2 eine erhöhte Verformbarkeit aufweist.

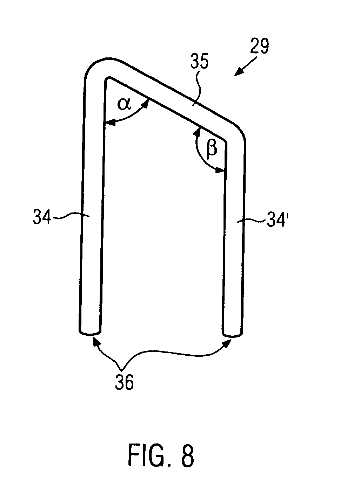

Der Haltebügel 29 des erfindungsgemäßen Gleitschutzelementträgers 2 in der in der Fig. 1 dargestellten Ausführungsform ist in Fig. 8 im Detail gezeigt.

Der Haltebügel 29 weist einen Steg 35 sowie zwei im Wesentlichen parallel zueinander verlaufende Halteschenkel 34, 34' auf, wodurch sich ein im Wesentlichen C-förmiger Bügel ergibt. Der Steg 35 des in Fig. 8 gezeigten Haltebügels 29 verläuft im Wesentlichen gerade und schräg zu den beiden Halteschenkeln 34, 34'. Da die freien Enden 36 der Halteschenkel 34, 34' im Wesentlichen auf einer Höhe liegen, führt die schräge Anordnung des Steg 35 bei dem Haltebügel 29 der in Fig. 8 gezeigten Ausführungsform dazu, dass der eine Schenkel 34' kürzer als der andere Schenkel 34 ist. Dabei bildet der kürzere Schenkel 34' mit dem Steg 35 einen stumpfen Winkel β, in der gezeigten Ausführungsform im Bereich von 120°. Der Längere der beiden Schenkel 34 bildet mit dem Steg 35 einen spitzen Winkel α, in der gezeigten Ausführungsform von etwa 60°.

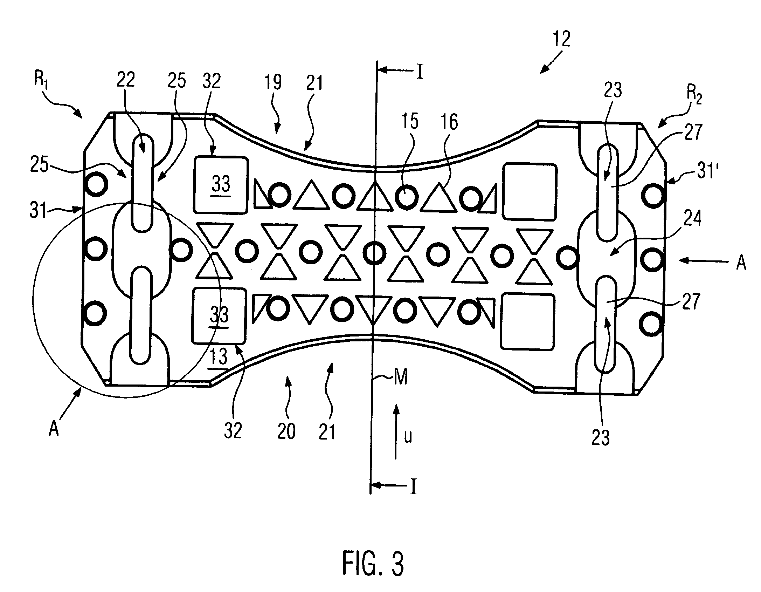

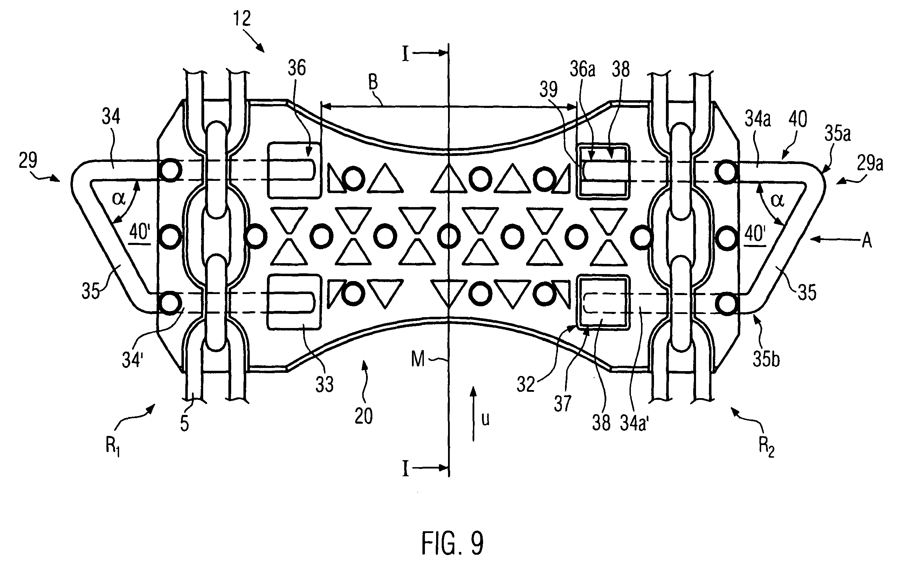

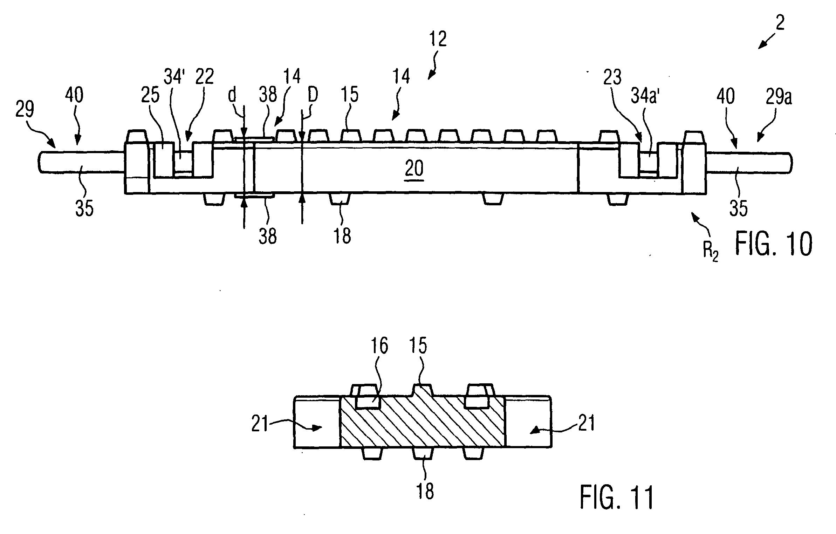

Fig. 9 zeigt einen erfindungsgemäßen Gleitschutzelementträger 2 der in Fig. 1 dargestellten Gleitschutzvorrichtung 1, bei dem jeweils ein in Fig. 8 gezeigter Haltebügel 29, 29a von den sich gegenüberliegenden lateralen Axialseiten 31, 31' in die Trägerplatte 12 eingesetzt ist. Fig. 10 zeigte eine Seitenaufsicht des Gleitschutzelementträgers 2 der Fig. 9 in Roll- bzw. Umlaufrichtung U, wobei der Übersichtlichkeit halber die Kettenstränge 5 weggelassen wurden. Fig. 11 zeigt einen Schnitt I-I entlang der Mittelachse M der Trägerplatte 12 der Fig. 3 bzw. 9.

In Fig. 9 ist zu erkennen, dass die Haltebügel 29, 29a in die Trägerplatte 12 so eingesetzt sind, dass die Halteschenkel 34, 34', 34a, 34a' in einer der Einstecköffnungen 28 liegen und die Aufnahme 22, 23, 24 im Bereich einer Einengung 25 durchqueren. Dabei ragen die Halteschenkel 34, 34', 34a, 34a' durch das Auge eines Kettengliedes des Kettenstranges 5 hindurch und verbinden den Kettenstrang 5 mit dem Gleitschutzelementträger 2.

Die Halteschenkel 34, 34', 34a, 34a' erstrecken sich durch die komplette Einstecköffnung 28 bis in die Aufnahmeöffnung 33 hinein. In den Ausnehmungsöffnungen 33 sind Befestigungshülsen 38 als Befestigungselemente 37 angeordnet, die mit den freien Ende 36, 36a der Halteschenkel 34, 34', 34a, 34a' verbunden sind und die Haltebügel 29, 29a somit an der Trägerplatte 12 gegen Abnehmen sichern. Die Haltebügel 29, 29a, insbesondere nebst daran befestigter abriebsbeständiger Befestigungshülsen 38 erhöhen die Stabilität des erfindungsgemäßen Gleitschutzelementträgers 2 in den axialen Randbereichen R1, R2, halten die Kettenstränge 5 des Laufnetzes 4 am Gleitschutzelementträger 2 und reduzieren den Verschleiß der Trägerplatte 12.

Die Befestigungshülsen 38 bestehen aus einem verschleißresistenten Werkstoff, der eine höhere Abriebsfestigkeit als das Material der Trägerplatte 12 aufweist, so dass diese Befestigungselemente 37 neben der Funktion des Sicherns vom Haltebügel 29 und gleichzeitig leicht austauschbare Verschleißelemente darstellen.

In Fig. 9 ist darstellungsbedingt nicht in jeder Ausnehmungsöffnung 33 eine Befestigungshülse 38 eingezeichnet. Der Anschaulichkeit halber sind an der einen Seite im axialen Randbereich R1 die beiden Befestigungshülsen 38 weggelassen und der in die Einstecköffnung 28 eingesetzte Haltebügel 29 ist ohne dieses Sicherungselement gezeigt, wobei die durchgezogene Linie sichtbare Teile des Haltebügels 29 und die gestrichelten Linien nicht sichtbare Bereiche des Haltebügels 29 veranschaulichen.

Gleiches gilt für die Darstellung des zweiten Haltebügels 29a auf der gegenüberliegenden Seite im anderen axialen Randbereich R2, bei dem das freie Ende 36a des kürzeren Schenkels 34a', der im montierten Zustand der Gleitschutzvorrichtung 1 in Umlaufrichtung U vor dem längeren Schenkel 34a liegt, mit der Befestigungshülse 38 verpresst gezeigt ist. Das andere freie Ende 36 des längeren Halteschenkels 34a ist sichtbar gezeichnet, da zu Veranschaulichungszwecken die Befestigungshülse 38 an dieser Stelle in einem Längsschnitt gezeigt ist, so dass auch die Hülsenöffnung 39 zu sehen ist, in die die freien Enden 36 der Halteschenkel 34a, 34a' eingepresst und kraftschlüssig mit dieser verbunden sind.

In Fig. 10 ist eine Aufsicht der Rückseite 20 des Gleitschutzelementträgers 2 der Fig. 9 gezeigt. Darin ist zu erkennen, dass bei der dargestellten Ausführungsform die senkrecht zur Trägerplatte weisende Abmessung d, bei einer zylindrischen Hülse deren Außendurchmesser, der Befestigungshülse 38 in etwa der Dicke D der Trägerplatte 12 im Bereich der Ausnehmung 32 entspricht. Auf diese Weise passt sich die Hülse 38 an die Lauffläche 13 der Trägerplatte 12 an und bildet ein weiteres traktionserhöhendes Gleitschutzelement 14 aus.

Wie in Fig. 9 zu erkennen ist, bilden die außerhalb der Trägerplatte 12 angeordneten, die Anbindungsstege 35 aufweisenden Abschnitte der Haltebügel 29, 29a ein Anschlusselement 40 in Form eines asymmetrisch dreieckigen Auges 40' für das Halteorgan 8, beispielsweise die in Fig. 1 gezeigten Schlaufen 9' an laufnetzseitigen Ende 9a der Haltegurte 9 aus.

Die Verwendung eines Haltebügels 29, 29a mit einem schräg zu den Halteschenkeln 34, 34', 34a, 34a' verlaufenden Anbindungssteg 35 ist insbesondere für Gleitschutzvorrichtungen 1 mit Haltegurten 9 vorteilhaft, da bei diesen verstärkt das Problem einer Überwanderung auftritt, wobei sich das am Laufnetz 4, hier an dem Anschlusselement 40 befestigte Ende 9a des Haltegurtes 9, beim Anfahren zunächst schneller bewegt als das am Spannorgan 11 befestigte Ende 9b des Haltegurtes 9, wie in Fig. 1 durch die Pfeile v₁, v₂ angedeutet ist. Durch diese Laufunterschiede der Überwanderung v₁ - v₂ muss der Spanngurt 9 am laufnetzseitigen Ende 9a nicht nur die entlang der Längsrichtung des Spanngurtes 9 wirkenden Spannkräfte S aufnehmen. Die Überwanderung v₁ - v₂ der entgegengesetzten Enden 9a, 9b des Spanngurtes 9 führen ferner dazu, dass am laufnetzseitigen Ende 9a eine entgegen der Rollrichtung U des Rades 3 wirkende Querkraft Z auftritt, die zu einem Verrutschen der die Anbindungsstege 35 umschlingenden Schlaufe 9' des Haltegurtes 9 führen kann.

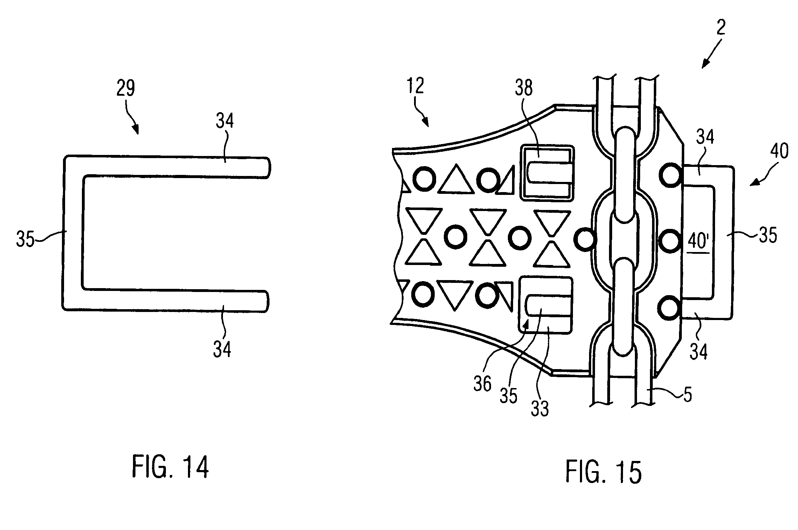

Verwendet man beispielsweise den in den Fig. 14 und 15 gezeigten Haltebügel 29, bei dem sich die Halteschenkel 34 im Wesentlichen senkrecht zum Steg 35 erstrecken, besteht die Gefahr, dass das laufnetzseitige Ende 9a des Haltegurtes 9 in eine Ecke am Übergang zwischen Halteschenkel 34 und Steg 35 rutscht und sich dort festsetzt. Ein derartiges Festsetzen ist insbesondere problematisch, da dadurch der Gurt nicht gleichmäßig über seine gesamte Breite, sondern unregelmäßig belastet wird, sich aufräufelt und stärkeren Verschleiß zeigt.

Bei dem in Fig. 9 gezeigten erfindungsgemäßen Gleitschutzelementträger 2 sind die Anbindungsstege 35 schräg zur Roll- bzw. Umlaufrichtung U des montierten Gleitschutzelementträgers 2 ausgerichtet, wobei das in Rollrichtung U weisende Ende 35a der Anbindungsstege 35 weiter von der Mittellängsachse L des Fahrzeugreifens 3, die in der gezeigten Ausführungsform mit der Mittelachse M der Trägerplatte 12 im Wesentlichen zusammenfällt, entfernt ist als das entgegen der Rollrichtung U weisende Ende 35b der Anbindungsstege 35. Dies führt zu einer Vororientierung des laufnetzseitigen Endes 9a des Haltegurtes 9 an diesem Anschlusselement 40, welche die Überwanderung kompensiert. Ferner unterbindet der spitze Winkel α zwischen dem längeren Halteschenkel 34, 34a und dem Steg 35 ein Verrutschen des Gurtes auf diese Ecke, wenn nur die Spannkraft S ohne zusätzliche Querkraft Z anliegt.

Im Folgenden wird auf weitere vorteilhafte Ausgestaltungen des erfindungsgemäßen Gleitschutzelementträgers eingegangen, wobei für Elemente, deren Funktion und/oder Aufbau ähnlich oder identisch zu Teilen der vorherigen Ausführungsformen sind, die gleichen Bezugszeichen verwendet werden.

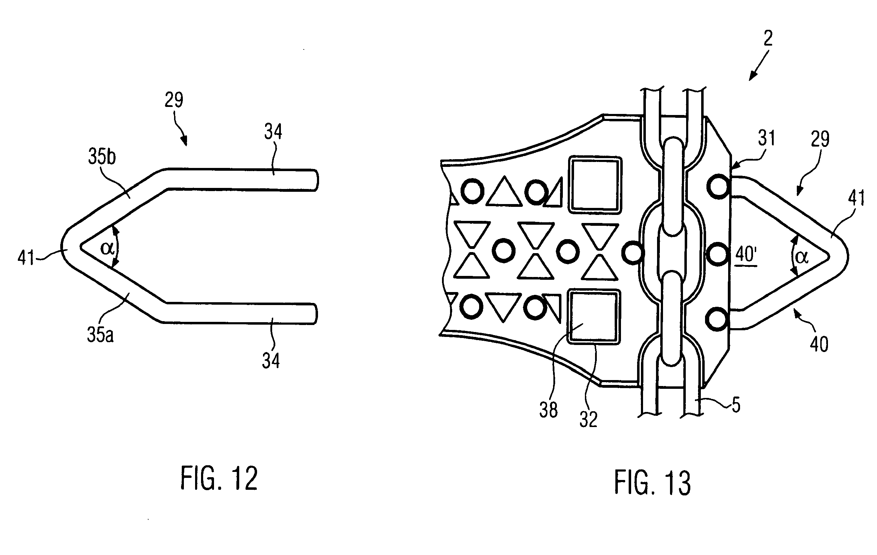

Die Fig. 12 und 13 zeigen einen Gleitschutzelementträger 2 gemäß einer zweiten Ausführungsform mit einem Haltebügel 29, bei dem der Steg 35 im Wesentlichen winkelförmig ausgestaltet ist. Beim Übergang vom einen zum anderen Halteschenkel 34 weist der Steg 35 eine Knickstelle 41 auf, an welcher die beiden Abschnitte 35a und 35b des Steg 35 einen spitzen Winkel α bilden.

Beim Einsetzen eines derartigen Haltebügels 29 in analoger Weise zum Haltebügel 29, 29a der Fig. 8 in die Trägerplatte, die in den Fig. 2 und 3 gezeigt ist, bildet der außerhalb der Trägerplatte 12 angeordnete, den Steg 35 aufweisende Abschnitt des Haltebügels 29 ein Anschlusselement 40 in Form eines im Wesentlichen symmetrischen dreieckigen Auges 40' aus. Dabei bildet die Axialseite 31 der Trägerplatte 12, in die der Haltebügel 29 eingesetzt ist, die Basis des Dreiecks, welche dem spitzen Winkel α an der Knickstelle 41 des Steges 35 gegenüber liegt, wobei die Halteschenkel 34 im Wesentlichen vollständig in die Einstecköffnung 28 (nicht gezeigt) eingesetzt sind.

Ein derartiges Anschlusselement in Form eines im Wesentlichen symmetrischen dreieckigen Auges 40' eignet sich besonders für Gleitschutzvorrichtungen 1, die Halteketten oder Halteseile als Halteorgane 8 verwenden, die kraftübertragend an der Knickstelle 40 angreifen können.

Die in den Fig. 14 und 15 gezeigte dritte Ausführungsform des erfindungsgemäßen Gleitschutzelementträgers 2 umfasst einen Haltebügel 29 mit einem geraden Steg 35, der im Wesentlichen senkrecht zu den Halteschenkeln 34 angeordnet ist und die Form eines U-Bügels aufweist. Werden die Halteschenkel 34 nicht vollständig in die Einstecköffnung 28 eingeführt, wie in Fig. 15 dargestellt, weist der Gleitschutzelementträger 2 ein Anschlusselement 40 in Form eines im Wesentlichen rechteckigen Auges 40' aus, das von dem Anbindungssteg 35, dem parallel zu diesem verlaufenden Seitenrand 31 der Trägerplatte 12 und den aus der Einstecköffnung 28 herausstehenden Bereichen der Halteschenkel 34 umfasst wird.

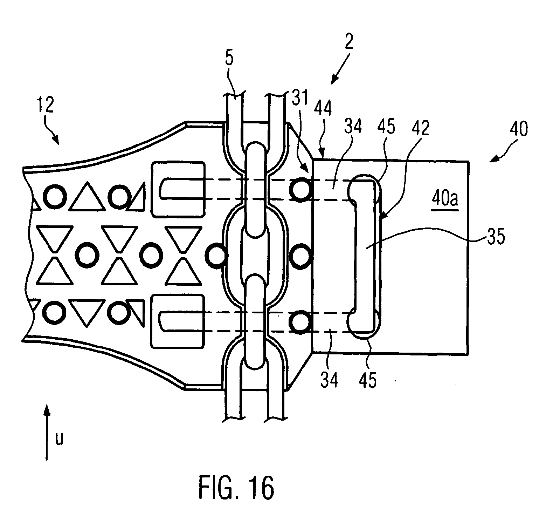

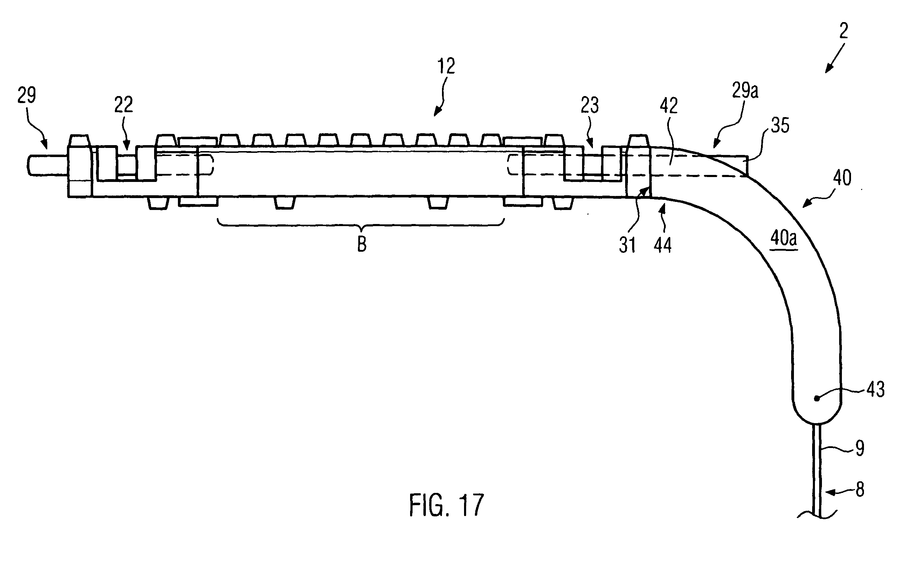

Der Haltebügel der Fig. 14 eignet sich insbesondere als Verbindungsmittel 42, welches ein Anschlusselement 40 mit der Trägerplatte 12 wiederholt lösbar verbindet. Dies ist in den Fig. 16 und 17 beispielhaft dargestellt für eine sich selbstaufziehende Gleitschutzvorrichtung 1, wie sie beispielsweise aus der Druckschrift EP 376 428 bekannt ist.

Die das Anschlusselement 40 bildenden gebogenen Ausleger 40a sind an die Fahrzeugradform angepasst und liegen im montierten Zustand im Übergangsbereich von Reifenlauffläche 7 zur Fahrzeugreifenflanke 7a. An ihrem von der Trägerplatte 12 weg gerichteten Ende sind die Ausleger 40a mit einem Befestigungsbolzen 43 versehen, an dem das eine Ende des Halteorgans 8 befestigt ist. Als Halteorgan 8 ist beispielsweise eine Haltespeiche 9 angedeutet, die sich vom Befestigungsbolzen 43 des Auslegers 40a bis zu der im Bereich der Radnabe angeordneten Befestigungseinrichtung (nicht gezeigt) erstreckt.

An dem befestigungsseitigen Bereich 44 des Anschlusselementes 40, das mit einer Axialseite 31, 31' der Trägerplatte 12 mittels eines das Verbindungsmittel 42 bildenden Haltebügels 29 verbunden wird, weist der Ausleger 40a Montageöffnungen 45 auf, die mit den Einstecköffnungen 28 (nicht gezeigt) der Trägerplatte 12 fluchten und somit durchgängige Kanäle ausbilden, in welchen die Halteschenkel 34, 34', 34a, 34a' des Haltebügels 29 eingesetzt sind.

Im montierten Zustand, der in den Fig. 16 und 17 gezeigt ist, kommt der Steg 35 des Haltebügels 29 an der Außenseite des Auslegers 40a zum Liegen und verhindert ein Abnehmen des Auslegers 40a von der Trägerplatte 12.

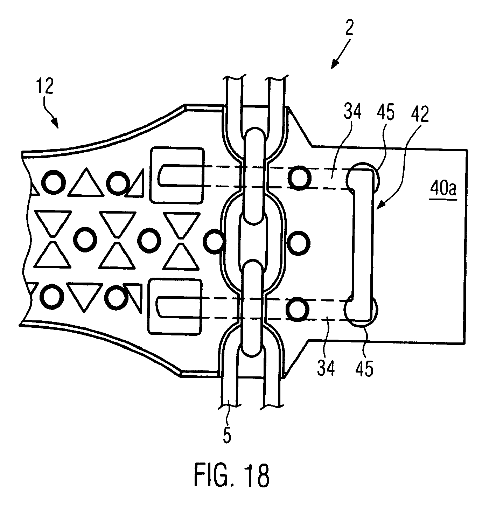

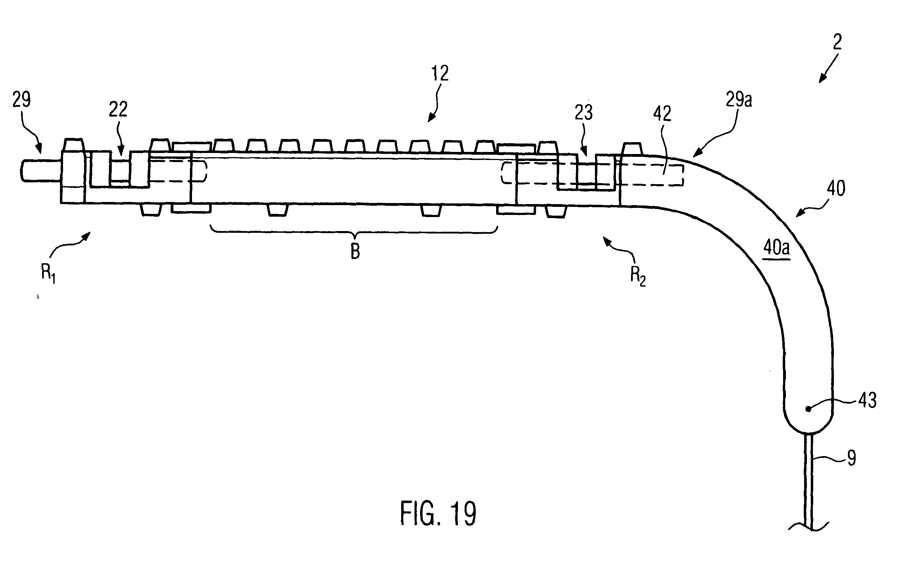

Schließlich kann, gemäß einer weiteren in Fig. 18 und 19 gezeigten Ausführungsform des erfindungsgemäßen Gleitschutzelementträgers 2, der Haltebügel der Fig. 14 auch als verschleißminderndes und die Festigkeit erhöhendes Element bei bekannten selbstaufziehenden Gleitschutzvorrichtungen 1 eingesetzt werden, bei welchen die Trägerplatte 12 einstückig mit dem das Anschlusselement 40 bildenden Ausleger 40a gefertigt ist. In diesem Fall wird der Ausleger 40a lediglich mit den entsprechenden Montageöffnungen 45 versehen, die mit den Einstecköffnungen 28 der Trägerplatte 12 fluchten und eine durchgängige Öffnung ausbilden in welche die Halteschenkel 34, 34', 34a, 34a' des Haltebügels 29 eingesetzt werden.

## Patentansprüche

1. Gleitschutzelementträger (2) für das Laufnetz (4) einer Gleitschutzvorrichtung (1) für einen Fahrzeugreifen (3), umfassend eine Trägerplatte (12), die an sich gegenüberliegenden axialen Randbereichen (R1, R2) jeweils wenigstens eine Aufnahme (22, 23) für das Laufnetz (4), und einen Haltebügel (29), der einen Steg (35) und zwei im wesentlichen parallel zueinander verlaufende in eine Einstecköffnung (28) der Trägerplatte (12) eingesetzte Halteschenkel (34, 34') aufweist, wobei wenigstens einer der Halteschenkel (34, 34') die wenigstens eine Aufnahme (22) an zumindest einem der axialen Randbereiche (R1) durchquert, **dadurch gekennzeichnet, dass** ein weiterer Haltebügel (29a) vorgesehen ist, der mit wenigstens einem seiner Halteschenkel (34a, 34a') die wenigstens eine Aufnahme (23) an dem anderen axialen Randbereich (R2) durchquert, und dass die Trägerplatte (12) zwischen den sich gegenüberliegenden Enden (36, 36a) der Haltebügel (29, 29a) einen biegsamen Bereich (B) mit gegenüber den von den Halteschenkeln (34, 34', 34a, 34a') eingenommenen Bereichen erhöhter Verformbarkeit aufweist.

2. Gleitschutzelementträger (2) gemäß Anspruch 1, **dadurch gekennzeichnet, dass** der außerhalb der Trägerplatte (12) angeordnete, den Steg (35) aufweisende Abschnitt wenigstens eines Haltebügels (29, 29a) ein Anschlusselement (40) für ein die Trägerplatte (12) auf dem Fahrzeugreifen (3) fixierendes Halteorgan (8) ausbildet.

3. Gleitschutzelementträger (2) gemäß Anspruch 1 oder 2, **dadurch gekennzeichnet, dass** zwei Haltebügel (29, 29a) von sich gegenüberliegenden Axialseiten (31, 31') in die Trägerplatte (12) eingesetzt sind, die jeweils ein Anschlusselement (40) für das Halteorgan (8) mit der Trägerplatte (12) verbinden und/oder deren außerhalb der Trägerplatte (12) angeordnete, den Steg (35) aufweisende Abschnitt ein Anschlusselement (40) für das Halteorgan (8) ausbildet.

4. Gleitschutzelementträger (2) gemäß einem der Ansprüche 1 bis 3, **dadurch gekennzeichnet, dass** der Steg (35) im wesentlichen gerade und senkrecht zu den beiden Halteschenkeln (34, 34') verläuft.

5. Gleitschutzelementträger (2) gemäß einem der Ansprüche 1 bis 3, **dadurch gekennzeichnet, dass** der Steg (35) im wesentlichen schräg und senkrecht zu den beiden Halteschenkeln (34, 34') verläuft.

6. Gleitschutzelementträger (2) gemäß einem der Ansprüche 1 bis 3, **dadurch gekennzeichnet, dass** Steg (35) winkelförmig ausgestaltet ist.

7. Gleitschutzelementträger (2) gemäß einem der Ansprüche 1 bis 6, **dadurch gekennzeichnet, dass** wenigstens ein Befestigungselement (37) den Haltebügel (29, 29a) an der Trägerplatte (12) sichert.

8. Gleitschutzelementträger (2) gemäß Anspruch 7, **dadurch gekennzeichnet, dass** das wenigstens eine Befestigungselement (37) ein Gleitschutzelement ausbildet.

9. Gleitschutzelementträger (2) gemäß Anspruch 7 oder 8, **dadurch gekennzeichnet, dass** das Befestigungselement (37) aus einem Material besteht, dessen Abriebsfestigkeit höher ist als die der Trägerplatte (12).

10. Gleitschutzelementträger (2) gemäß einem der Ansprüche 1 bis 9, **dadurch gekennzeichnet, dass** sich die Einstecköffnung (28) von einer Axialseite (31, 31') der Trägerplatte (12) bis zu einer von außen zugänglichen Ausnehmung (32) der Trägerplatte (12) verläuft.

11. Gleitschutzelementträger (2) gemäß Anspruch 10, **dadurch gekennzeichnet, dass** eine durch die Trägerplatte (12) hindurchgehende Öffnung (33) die Ausnehmung (32) ausbildet.

12. Gleitschutzelementträger (2) gemäß Anspruch 10 oder 11, **dadurch gekennzeichnet, dass** das Befestigungselement (37) in der Ausnehmung (32) angeordnet ist.

13. Gleitschutzelementträger (2) gemäß einem der Ansprüche 8 bis 12, **dadurch gekennzeichnet, dass** als Befestigungsmittel (37) eine Befestigungshülse (38) vorgesehen ist.

14. Gleitschutzelementträger (2) gemäß einem der Ansprüche 1 bis 13, **dadurch gekennzeichnet, dass** der Außendurchmesser (d) der Befestigungshülse (38) in etwa der Dicke (D) der Trägerplatte (12) im Bereich der Ausnehmung (32) entspricht.

15. Gleitschutzelementträger (2) gemäß einem der Ansprüche 1 bis 14, **dadurch gekennzeichnet, dass** an wenigstens einem der Randbereiche (R1, R2) eine durchgehende Aufnahme (24) vorgesehen ist.

## Claims

1. An anti-skid element support (2) for the chain mesh (4) of an anti-skid device (1) for a vehicle tyre (3), comprising a support plate (12) which on mutually opposed axial edge regions (R1, R2) has at least one receiving means (22, 23) in each case for the chain mesh (4), and a holding bracket (29) which has a web (35) and two holding arms (34, 34') extending substantially parallel to each other and inserted into an insertion opening (28) in the support plate (12), wherein at least one of the holding arms (34, 34') passes through at least one receiving means (22) on at least one of the axial edge regions (R1), **characterized in that** a further holding bracket (29a) is provided which passes with at least one of its holding arms (34a, 34a') through at least one receiving means (23) on the other axial edge region (R2), and between the opposed ends (36, 36a) of the holding brackets (29, 29a) the support plate (12) has a flexible region (B) with an increased degree of deformability compared with the regions occupied by the holding arms (34, 34', 34a, 34a').

2. An anti-skid element support (2) according to Claim 1, **characterized in that** the portion of at least one holding bracket (29, 29a) arranged outside the support plate (12) and comprising the web (35) forms an attachment element (40) for a holding member (8) which fixes the support plate (12) on the vehicle tyre (3).

3. An anti-skid element support (2) according to Claim 1 or 2, **characterized in that** two holding brackets (29, 29a) are inserted from opposite axial sides (31, 31') into the support plate (12), which two holding brackets (29, 29a) in each case connect an attachment element (40) for the holding member (8) to the support plate (12) and/or of which the portion arranged outside the support plate (12) and comprising the web (35) forms an attachment element (40) for the holding member (8).

4. An anti-skid element support (2) according to any one of Claims 1 to 3, **characterized in that** the web (35) extends substantially straight and at a right angle to the two holding arms (34, 34').

5. An anti-skid element support (2) according to any one of Claims 1 to 3, **characterized in that** the web (35) extends substantially obliquely and at a right angle to the two holding arms (34, 34').

6. An anti-skid element support (2) according to any one of Claims 1 to 3, **characterized in that** the web (35) is made angular.

7. An anti-skid element support (2) according to any one of Claims 1 to 6, **characterized in that** at least one fastening element (37) secures the holding bracket (29, 29a) on the support plate (12).

8. An anti-skid element support (2) according to Claim 7, **characterized in that** the at least one fastening element (37) is an anti-skid element.

9. An anti-skid element support (2) according to Claim 7 or 8, **characterized in that** the fastening element (37) consists of a material of which the abrasion resistance is higher than that of the support plate (12).

10. An anti-skid element support (2) according to any one of Claims 1 to 9, **characterized in that** the insertion opening (28) extends from one axial side (31, 31') of the support plate (12) as far as a recess (32) in the support plate (12) accessible from the outside.

11. An anti-skid element support (2) according to Claim 10, **characterized in that** an opening (33) passing through the support plate (12) forms the recess (32).

12. An anti-skid element support (2) according to Claim 10 or 11, **characterized in that** the fastening element (37) is arranged in the recess (32).

13. An anti-skid element support (2) according to any one of Claims 8 to 12, **characterized in that** a fastening sleeve (38) is provided as the fastening means (37).

14. An anti-skid element support (2) according to any one of Claims 1 to 13, **characterized in that** the external diameter (d) of the fastening sleeve (38) corresponds approximately to the thickness (D) of the support plate (12) in the region of the recess (32) .

15. An anti-skid element support (2) according to any one of Claims 1 to 14, **characterized in that** a continuous receiving means (24) is provided on at least one of the edge regions (R1, R2).

## Revendications

1. Support d'élément antidérapant (2) pour le filet de roulement (4) d'un dispositif antidérapant (1) pour un pneu de véhicule (3), comprenant une plaque de support (12) qui présente sur chacune de ses zones de bordure axiales opposées (R1, R2) au moins un logement (22, 23) pour le filet (4), et un étrier de fixation (29) qui présente une branche centrale (35) et deux branches de fixation (34, 34') essentiellement parallèles introduites dans une ouverture d'introduction (28) de la plaque de support (12), étant précisé que l'une au moins des branches de fixation (34, 34') traverse ledit logement (22) au niveau de l'une au moins des zones de bordure axiales (R1), **caractérisé en ce qu'**il est prévu un autre étrier de fixation (29a), qui traverse avec l'une au moins de ses branches latérales (34a, 34a') le ou les logements (23) sur l'autre zone de bordure (R2), et **en ce que** la plaque de support (12) présente, entre les extrémités opposées (36, 36a) des étriers de fixation (29, 29a), une zone flexible (B) avec une déformabilité plus grande que celle des zones occupées par les branches de fixation (34, 34', 34a, 34a').

2. Support d'élément antidérapant (2) selon la revendication 1, **caractérisé en ce que** la partie d'au moins un étrier de fixation (29, 29a) disposée en dehors de la plaque de support (12) et pourvue de la branche centrale (35) forme un élément de liaison (40) pour un organe de fixation (8) qui fixe la plaque de support (12) sur le pneu de véhicule (3).

3. Support d'élément antidérapant (2) selon la revendication 1 ou 2, **caractérisé en ce qu'**on introduit dans la plaque de support (12), par deux côtés axiaux opposés (31, 31'), deux étriers de fixation (29, 29a) qui relient chacun un élément de liaison (40) pour l'organe de fixation (8) à la plaque de support (12) et/ou dont la partie disposée en dehors de ladite plaque de support (12) et pourvue de la branche centrale (35) forme un élément de liaison (40) pour l'organe de fixation (8).

4. Support d'élément antidérapant (2) selon l'une des revendications 1 à 3, **caractérisé en ce que** la branche centrale (35) est globalement droite et perpendiculaire aux deux branches de fixation (34, 34').

5. Support d'élément antidérapant (2) selon l'une des revendications 1 à 3, **caractérisé en ce que** la branche centrale (35) est globalement inclinée et perpendiculaire aux deux branches de fixation (34, 34').

6. Support d'élément antidérapant (2) selon l'une des revendications 1 à 3, **caractérisé en ce que** la branche (35) est angulaire.

7. Support d'élément antidérapant (2) selon l'une des revendications 1 à 6, **caractérisé en ce qu'**au moins un élément de fixation (37) immobilise l'étrier de fixation (29, 29a) sur la plaque de support (12).

8. Support d'élément antidérapant (2) selon la revendication 7, **caractérisé en ce que** ledit élément de fixation (37) forme un élément antidérapant.

9. Support d'élément antidérapant (2) selon la revendication 7 ou 8, **caractérisé en ce que** l'élément de fixation (37) se compose d'un matériau dont la résistance à l'abrasion est plus grande que celle de la plaque de support (12).

10. Support d'élément antidérapant (2) selon l'une des revendications 1 à 9, **caractérisé en ce que** l'ouverture d'introduction (28) s'étend d'un côté axial (31, 31') de la plaque de support (12) jusqu'à un creux (32) de la plaque de support (12) qui est accessible de l'extérieur.

11. Support d'élément antidérapant (2) selon la revendication 10, **caractérisé en ce qu'**une ouverture (33) qui traverse la plaque de support (12) forme le creux (32).

12. Support d'élément antidérapant (2) selon la revendication 10 ou 11, **caractérisé en ce que** l'élément de fixation (37) est disposé dans le creux (32).

13. Support d'élément antidérapant (2) selon l'une des revendications 8 à 12, **caractérisé en ce qu'**il est prévu comme moyen de fixation (37) une douille de fixation (38).

14. Support d'élément antidérapant (2) selon l'une des revendications 1 à 13, **caractérisé en ce que** le diamètre extérieur (d) de la douille de fixation (38) correspond à peu près à l'épaisseur (D) de la plaque de support (12) dans la zone du creux (32).

15. Support d'élément antidérapant (2) selon l'une des revendications 1 à 14, **caractérisé en ce qu'**il est prévu sur l'une au moins des zones de bordures (R1, R2) un logement traversant (24).
